(19)

Europäisches
Patentamt
European
Patent Office
Office européen
des brevets

(11) **EP 4 468 698 A1**

(12) **EUROPEAN PATENT APPLICATION**

(43) Date of publication:
**27.11.2024 Bulletin 2024/48**

(21) Application number: **24177489.2**

(22) Date of filing: **22.05.2024**

(51) International Patent Classification (IPC):
**H04N 13/261** (2018.01)     **G06T 7/50** (2017.01)
**G06V 10/70** (2022.01)

(52) Cooperative Patent Classification (CPC):
**H04N 13/261; G06T 7/50;** H04N 13/128

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 US 202363503931 P
25.09.2023 US 202318473947**

(71) Applicants:
• **Disney Enterprises, Inc.
Burbank, CA 91521 (US)**
• **ETH Zürich (Eidgenössische Technische
Hochschule
Zürich)
8092 Zürich (CH)**

(72) Inventors:
• **SCHROERS, Christopher Richard
Burbank, 91521 (US)**

• **COSTA, Danielle Christina
Burbank, 91521 (US)**
• **DOGGETT, Erika Varis
Burbank, 91521 (US)**
• **HATTORI, Shinobu
Burbank, 91521 (US)**
• **JACOBS, Evan Patrick
Burbank, 91521 (US)**
• **MEHL, Lukas Francesco
Burbank, 91521 (US)**
• **REED, Michael Kazimir
Burbank, 91521 (US)**

(74) Representative: **Morrall, Jonathan Ian McLachlan
et al
Kilburn & Strode LLP
Lacon London
84 Theobalds Road
London WC1X 8NL (GB)**

(54) **ARTISTICALLY CONTROLLABLE STEREO CONVERSION**

(57)     The present invention sets forth a technique for performing stereo conversion. This technique includes generating, via a first machine learning model, depth information associated with objects depicted in an input image. The technique also includes generating, via a second set of machine learning models, a disparity map for the input image based on the depth information. The technique further includes extracting, via the second set of machine learning models, feature data from the input image and warping the feature data based on the generated disparity map. The technique further includes generating, via the second set of machine learning models, an output image such that the input image and the output image, when viewed together, form a stereo pair of images. The functions and transformations used in the various machine learning models are fully differentiable, allowing for improved end-to-end training of the machine learning models.

**FIG. 2**

**Description**

**CROSS-REFERENCE TO RELATED APPLICATIONS**

This application claims priority benefit of United States Patent Application titled "ARTISTICALLY CONTROLLABLE STEREO CONVERSION," serial number 18/473,947, filed September 25, 2023, which claims priority benefit to U.S. provisional application titled "ARTISTICALLY CONTROLLABLE ARTIFICIAL INTELLIGENCE STEREO CONVERSION," filed on May 23, 2023, and having Ser. No. 63/503,931. The subject matter of these related applications is hereby incorporated herein by reference

**BACKGROUND**

**Field of the Various Embodiments**

Embodiments of the present disclosure relate generally to machine learning and computer vision and, more specifically, to techniques for performing artistically controllable stereo conversion using artificial intelligence.

**Description of the Related Art**

Stereo conversion refers to the generation of stereoscopic video content from a traditional monocular (non-stereo) video sequence. For example, live-action feature films are often not filmed in stereo, but it may be desirable for a movie studio to produce a stereo version of a film for distribution alongside a non-stereo version of the film. This is achieved through stereo conversion implemented as a post-production process. Further, movie studios often possess large amounts of legacy content, and stereo conversion allows the studio to make this legacy content available to audiences in stereo.

Existing stereo conversion techniques may utilize computer graphics (CG) warping models to perform stereo conversion. These techniques first determine the relative differences in perceived depths among the various objects in a scene (referred to herein as "disparity values") for a target frame. The techniques then apply backward warping or optical flows using the disparity values to generate an output image from an input image.

One drawback of the above techniques is that there is no mechanism for a user to provide additional information based on a known reference input frame. Examples of additional information include explicit disparity values or value ranges for the frame, annotations of points or areas of interest in the frame, or identification of areas in the frame as fixed background.

Other existing techniques may utilize deep neural networks to generate a stereo pair of images from a single input image by first applying a pre-trained model to generate plausible depth information for a provided image. The depth information is used to synthesize the second image needed to form the stereo pair, as well as to generate a predicted disparity map. As with the above techniques, one drawback of the deep neural network techniques is that a user is unable to exercise artistic control over the process at inference time by providing explicit disparity values or otherwise annotating the input image. Further, neural network-based techniques often utilize non-differentiable functions or transformations either in the neural network model itself or in ancillary functions and features, which impacts the efficiency of the end-to-end training of the stereo conversion model. As the foregoing illustrates, what is needed in the art are more effective techniques for AI stereo conversion of video frames or sequences.

**SUMMARY**

One embodiment of the present invention sets forth a technique for performing stereo conversion. The technique includes generating, using one or more machine learning models, a predicted disparity map for an input image based on one or more depth values associated with pixels within the input image. The technique also includes extracting feature data from the input image, wherein the feature data represents the pixels within the input image and applying an offset to each pixel represented by the feature data based on the predicted disparity map. The technique further includes identifying a plurality of pixels represented by the feature data that are offset to the same pixel location and assigning, based on the predicted disparity map, a visibility value to each of the plurality of pixels. The technique further includes modifying, based on the visibility values, each of the plurality of pixels such that one of the plurality of pixels is visible and the others of the plurality of pixels are hidden and generating an output image based on the modified plurality of pixels such that the input image and the output image form a stereo pair of images.

One technical advantage of the disclosed technique relative to the prior art is that the functions and transformations used in the various stereo conversion steps are fully differentiable, allowing for improved end-to-end training of the disclosed stereo conversion model. Further, the disclosed technique allows for optional artistic control inputs from a user, as well as the option of considering additional inputs other than the input frame. Also, the disclosed technique incorporates predicted disparities from the input frame in order to perform depth-aware splatting and inpainting, wherein disparity information from a known reference input frame is used when generating and synthesizing a corresponding output frame. The optional use of multiple input frames also allows the disclosed technique to enhance temporal consistency across multiple predicted output video frames. These technical advantages provide one or more technological improvements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 illustrates a computer system configured to implement one or more aspects of various embodiments.

Figure 2 is a more detailed illustration of the training engine of Figure 1, according to various embodiments.

Figure 3A is a more detailed illustration of the stereo conversion engine of Figure 1, according to various embodiments.

Figure 3B is a more detailed illustration of the stereo conversion engine of Figure 1, according to various embodiments.

Figure 4 depicts an exemplary input image and the results of various warping and disparity estimation processes applied to the input image, according to some embodiments.

Figure 5 is a flow diagram of method steps for training a deep learning model to perform stereo conversion, according to various embodiments.

Figure 6 is a flow diagram of method steps for performing stereo conversion on a single input image, according to various embodiments.

Figure 7 is a flow diagram of method steps for performing stereo conversion on a single video frame as an input image using neighboring video frames as keyframes, according to various embodiments.

## DETAILED DESCRIPTION

In the following description, numerous specific details are set forth to provide a more thorough understanding of the various embodiments. However, it will be apparent to one of skill in the art that the inventive concepts may be practiced without one or more of these specific details.

### System Overview

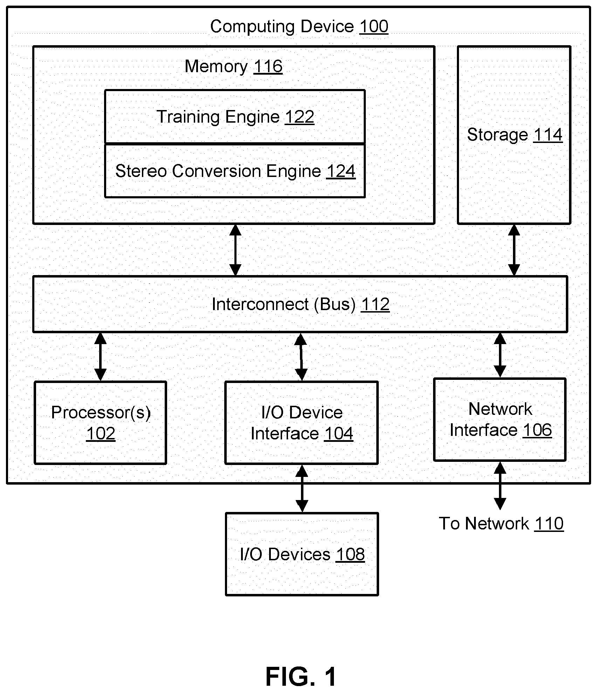

Figure 1 illustrates a computing device 100 configured to implement one or more aspects of various embodiments. In one embodiment, computing device 100 includes a desktop computer, a laptop computer, a smart phone, a personal digital assistant (PDA), tablet computer, or any other type of computing device configured to receive input, process data, and optionally display images, and is suitable for practicing one or more embodiments. Computing device 100 is configured to run a training engine 122 and a stereo conversion engine 124 that reside in a memory 116.
It is noted that the computing device described herein is illustrative and that any other technically feasible configurations fall within the scope of the present disclosure. For example, multiple instances of training engine 122 and stereo conversion engine 124 could execute on a set of nodes in a distributed and/or cloud computing system to implement the functionality of computing device 100. In another example, training engine 122 and/or stereo conversion engine 124 could execute on various sets of hardware, types of devices, or environments to adapt training engine 122 and/or stereo conversion engine 124 to different use cases or applications. In a third example, training engine 122 and stereo conversion engine 124 could execute on different computing devices and/or different sets of computing devices.
In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

I/O devices 108 include devices capable of providing input, such as a keyboard, a mouse, a touch-sensitive screen, and so forth, as well as devices capable of providing output, such as a display device. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (WiFi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid state storage devices. Training engine 122 and stereo conversion engine 124 may be stored in storage 114 and loaded into memory 116 when executed.

Memory 116 includes a random access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including training engine 122 and stereo conversion engine 124.

In some embodiments, training engine 122 trains one or more machine learning models to perform stereo conversion. In stereo conversion, the contents of an image or video frame are modified to generate a corresponding output image forming a stereo pair with the input image or video frame. Stereo conversion engine 124 executes machine learning model(s) to generate a predicted output image or frame from a provided image or video frame. "Frame" and "video frame" are used interchangeably throughout this description.

More specifically, training engine 122 and stereo conversion engine 124 are configured to train and execute one or more machine learning models that perform stereo conversion on an input image or video frame. The input image or video frame optionally includes additional information such as annotated disparity estimates or camera location/posing information. In the case of a video frame presented as input, the additional information may also include immediately adjacent video frames or neighboring video frames within a predetermined temporal distance from the input video frame. The adjacent or neighboring video frames can be used to inform the generation of the predicted output video frame to improve the perception of depth in the stereo pair formed by the input and output video frames.

Stereo Conversion

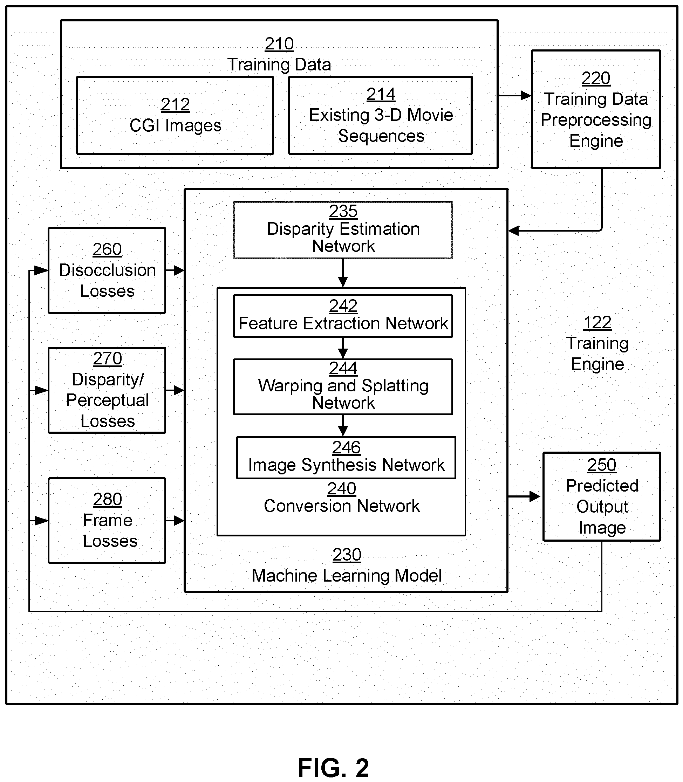

Figure 2 is a more detailed illustration of training engine 122 of Figure 1, according to some embodiments. Training engine 122 trains a machine learning model 230 that modifies an input image or a video frame to produce a predicted output image 250. The predicted output image 250 and the corresponding input image or video frame form a stereo pair of images. This stereo pair of images, when viewed together, depict a scene that presents the illusion of relative depth between the various objects in the scene and between the objects and the background. As shown, training engine 122 includes a machine learning model 230, training data 210, and training data preprocessing engine 220.

Training data 210 may include Computer Generated Imagery (CGI) images 212. A CGI image is a two-dimensional image or video frame depicting objects and/or backgrounds within a virtual three-dimensional space. In various embodiments, each of the CGI images 212 further includes explicit location, size, and shape data describing the objects and/or backgrounds depicted in the CGI image.

Training data 210 may also include existing three-dimensional (3D) movie sequences 214. 3D movie sequences 214 include multiple frames, where each frame includes a stereo pair of images. As described above, this stereo pair of images, when viewed together, depict a scene that presents the illusion of relative depth between the various objects in the scene and between the objects and the background.

The training data preprocessing engine 220 processes training data 210 and then provides the processed training data to machine learning model 230. For example, in various embodiments, the training data preprocessing engine 220 processes the CGI image 212 and associated explicit location, size, and shape data to calculate the relative depths between the various objects and/or backgrounds depicted in the CGI image 212. Based on these calculated relative depths, the training data preprocessing engine 220 calculates ground truth disparity values for the objects depicted in the scene. In various embodiments, disparity refers to the offset, expressed in pixels, between an object's depicted location in one image (e.g., the left image) of a stereo pair and that same object's depicted location in the other image of the stereo pair (e.g., the right image). This offset in an object's location between the two images in a stereo pair provides the desired illusion of depth when a viewer views the stereo pair together.

In various embodiments, the training data 210 comprises existing 3D movie sequences 214. Each of these existing 3D movie sequences 214 includes a sequence of frames, with each frame represented as a stereo pair of images. In various embodiments, not all stereo pairs of images contained in an existing 3D movie sequence 214 are useful as training data for a stereo conversion machine learning model. In such embodiments, training data preprocessing engine 220 removes unwanted frames or sequences of frames from the 3D movie sequence 214. For example, training data preprocessing engine 220 removes frames from an existing 3D movie sequence 214 that contain no or little useful information, such as black or blank frames. Training data preprocessing engine 220 may also remove sequences of frames from an existing 3D movie sequence 214 where no 3D effect has been applied, such as studio intros or producer credits. In frames without any applied 3D effects, both images of the stereo image pair will be identical and may yield no useful training information for machine learning model 230.

Training data preprocessing engine 220 may further perform disparity estimation for frames in an existing 3D movie sequence 214. For a frame including a stereo pair of images, training data preprocessing engine 220 estimates disparity values for the frame based on the relative difference between an object's location in one image of the frame's stereo pair compared to the same object's location in the other image of the stereo pair.

Existing 3D movie sequences 214 may each include hundreds of thousands of individual frames. In various embodiments, training data preprocessing engine 220 may divide the 3D movie sequence into multiple shots, each containing a consecutive sequence of correlated frames. As an example, one shot may be a dialogue scene between two characters, while a subsequent shot may depict a car chase through a city. Training data preprocessing engine 220 may divide an existing 3D movie sequence 214 into shots using existing scene selection tools, or the existing 3D movie sequence 214 may include an Edit Decision List that delineates the beginnings and endings of individual shots within the 3D movie sequence using, e.g., time stamps or frame numbers.

After training data preprocessing engine 220 has removed unwanted frames or sequences of frames and divided the 3D movie sequence into shots, training data preprocessing engine 220 selects a representative frame or frame sequence from a shot to use as training data after further filtering out unsuitable frames from the shot. An unsuitable frame may have an average brightness that does not fall between predetermined minimum and maximum levels. Another indication of an unsuitable frame is a large number of pixels exhibiting vertical disparity - that is, a particular object's representation in one image of the stereo pair is offset vertically compared to its representation in the other image of the stereo pair. Unlike horizontal disparity offsets, vertical disparity offsets do not contribute to a perceived illusion of depth in the stereo pair and may indicate a poorly applied 3D effect or shortcomings in the disparity estimation. Likewise, a frame with a large percentage of pixels having a horizontal disparity less than a predetermined threshold (e.g., five pixels) may indicate that an applied 3D effect is minimal based on the estimated disparity values for the frame.

In some embodiments where training engine 122 trains machine learning model 230 to perform stereo conversion on an image, training data preprocessing engine 220 may select a representative frame from a shot after filtering out unsuitable frames as described above. In other embodiments where training engine 122 trains machine learning model 230 to perform stereo conversion on a sequence of images, training data preprocessing engine 220 may select a representative sequence of frames from a particular shot after further filtering out frame sequences in the shot which show little or no object motion in the shot (i.e. static shots). For example, training data preprocessing engine 220 may impose a minimum object motion threshold between adjacent frames. In one, non-limiting example, the minimum object motion threshold may be eight pixels between adjacent frames.

The machine learning model 230 includes a disparity estimation network 235. The disparity estimation network 235 takes preprocessed training data as input, either a CGI image or one frame of a representative sequence of frames from an existing 3D movie sequence. In various embodiments where the input image to disparity estimation network 235 is one frame of a representative sequence of frames from an existing 3D movie sequence, the disparity estimation network 235 produces a reduced-resolution representation of one image from the frame (e.g., the left image or the right image) and predicts the depth d for each of the objects and backgrounds in the image. The depth d represents the distance between the camera and the object or background shown in the image. In various embodiments, the disparity estimation network 235 predicts the inverse depth ($1/d$), because images often depict background objects such as the sun or sky at great or near-infinite distances. The very large depth values associated with distant objects would complicate estimation calculations and introduce errors. Calculating inverse depths for objects avoids very large numbers in subsequent estimation calculations, as the inverse depths for very distant objects tend toward zero. The resulting inverse depth estimations are recorded on a per-pixel basis with the reduced-resolution image.

The disparity estimation network 235 aligns the pixel-wise inverse depth information for the reduced-resolution image to yield disparity, i.e., the per-pixel displacement vectors. This alignment step generates a horizontal displacement vector for each pixel that is proportional to the estimated inverse depth of the pixel. In this manner, pixels representing foreground (near) objects receive greater displacement vectors representing greater disparity values relative to pixels representing distant objects. These varying horizontal displacements generate the 3D effect of perceived depth in the output image predicted by machine learning model 230.

In various embodiments where the input provided to disparity estimation network 235 is a CGI image with associated ground truth disparity values, the disparity estimation network 235 aligns its estimated disparity values with the ground truth disparity values using a least squares alignment. In various other embodiments where the input to disparity estimation network 235 is a representative sequence of frames from an existing 3D movie sequence, the disparity estimation network 235 calculates ground truth disparity values from corresponding left and right images for each frame of the representative sequence of frames and aligns its estimated disparity values with the calculated ground truth disparity values using a least squares alignment.

In some embodiments, disparity estimation network 235 optionally performs disparity estimation on a reduced-resolution version of the input. The input may be a CGI image or one frame of a representative sequence of frames from an existing 3D movie sequence. If the input is one frame of a representative sequence of frames from an existing 3D movie sequence, disparity estimation network 235 performs disparity estimation on either the right or left image of the frame. To generate a high-resolution disparity estimation, disparity estimation network 235 performs upsampling from the low-resolution disparity estimates and the high-resolution input. Specifically, disparity estimation network 235 uses bilateral upsampling with a neighborhood attention mechanism. In bilateral upsampling, the low-resolution disparity estimation values are resampled at a higher resolution to match the input, using a bilateral filter to preserve object edges in the high-resolution disparity estimation and to smooth flat regions of the high-resolution disparity estimation. The neighborhood attention mechanism favors disparity values from nearby pixels when generating disparity values for newly created pixels in the high-resolution disparity estimation.

As shown in Figure 2, machine learning model 230 also includes a conversion network 240. The disparity values estimated by disparity estimation network 235 are training inputs to the conversion network 240 of the machine learning model 230 and serve as trainable weight parameters. In order to avoid excessively large weight values in the conversion network 240, various embodiments of disparity estimation network 235 normalize the estimated disparity values. Minimum and maximum desired disparity values are predetermined for disparity estimation network 235, and disparity estimation network 235 normalizes generated disparity values to this range by applying a linear operator.

In operation, conversion network 240 performs feature extraction on the input image, warps the feature space representation of the input image according to the image's estimated disparity values, performs splatting, where multiple pixels of the input image are assigned to the same pixel in the warped image, and fills in regions of the image where warping has exposed areas of the background that were previously occluded. Conversion network 240 synthesizes the warped, splatted, and filled feature space representation of the input image into a predicted output image 250.

The inputs to the conversion network 240 are an input image and the high resolution disparity estimation associated with the image. In various embodiments, the input to the conversion network 240 may be a left image for which a corresponding predicted right image is to be generated, or a right image for which a corresponding predicted left image is to be generated. In various other embodiments, the input may be a center image for which both left and right output images are to be generated (for example, sequentially). In various embodiments where a right image is generated from an input left image or a left image is generated from an input right image, the input image and the generated predicted output image form a stereo pair. In various other embodiments where both a left image and a right image are generated from an input center image, the generated left and right images form a stereo pair.

Conversion network 240 includes a feature extraction network 242. The feature extraction network 242 performs pyramid feature extraction on the input image at varying levels of resolution. For each level of resolution, the feature extraction network 242 generates a feature vector representing the input image at that resolution. The feature vector generated for a particular resolution will differ from the feature vectors generated for different resolutions. The multiple feature vectors collectively form a multi-resolution feature vector representing the input image in feature space rather than the native representation of the input image as a matrix of RGB pixels.

Conversion network 240 further includes a warping and splatting network 244. The warping and splatting network 244 warps the feature space representation of the input image according to the per-pixel displacement vectors calculated above by the disparity estimation network 235. Specifically, each pixel in the feature space representation of the input image is shifted by a displacement vector proportional to the disparity value estimated for that pixel in the high-resolution disparity estimation.

The warped feature space representation of the input image includes disoccluded areas, where previously hidden areas of the background are exposed by the displacement of objects in the scene. These disoccluded areas are left unfilled by the warping process and are filled in during a later inpainting step. The warped representation also includes occluded areas where multiple pixels from the input image are displaced onto the same location in the feature space representation. The warping and splatting network 244 addresses these occluded areas with a differentiable warping strategy, which includes weights to determine the ordering of multiple pixels warped to the same location. This ordering determines which of multiple pixels displaced to the same location in feature space (i.e., splatted) should remain visible. The weights are generated from the per-pixel disparity values estimated above by the disparity estimation network 235. Foreground objects will have a smaller estimated depth value compared to background objects, and therefore the foreground objects' pixels were assigned larger disparity values by disparity estimation network 235. Thus, the disparity values provide a direct indication of which splatted pixels are in the foreground and should remain visible and which pixels are in the background and should remain hidden. Before using the disparity values to determine the ordering of splatted pixels, the warping and splatting network 244 normalizes the disparity values to a range of [-1,1] and scales the normalized values with a trainable parameter $\alpha$.

The warping and splatting network 244 performs the above warping and splatting process with every level of the multi-resolution feature vector. For each resolution level, the warping and splatting network 244 upsamples the estimated disparity values via interpolation to match the particular resolution level.

The warping and splatting network 244 also warps the original input image at the original resolution as well as at scaled resolutions corresponding to every level of the extracted feature pyramid. This provides a user-viewable representation of the effects of the warping and splatting. The warping and splatting network 244 further generates a warping mask that determines how many pixels were splatted to each location on the warped input image. The warping and splatting network 244 also generates a binary disocclusion mask that determines which pixels in the warped input image represent disoccluded background areas which will need to be inpainted.

The conversion network 240 includes an image synthesis network 246 that performs background-aware inpainting of disoccluded areas and addresses sharp edges and aliasing in occluded areas via compositing refinement. Finally, the image synthesis network 246 generates a predicted output image 250.

Given the warped image features and disparities on multiple resolutions as inputs, the image synthesis network 246 performs background-aware inpainting and compositing refinement. Inpainting refers to the filling-in of newly disoccluded background areas that were previously hidden by one or more foreground objects. Compositing refinement reduces aliasing and sharp edges at the new boundaries between foreground objects and backgrounds in occluded areas where previously exposed background has been covered by one or more foreground objects. The image synthesis network 246 performs background-aware inpainting using local multi-scale self-attention by applying a neighborhood-based self-attention technique to every resolution layer. In various embodiments, the image synthesis network 246 includes a single-headed attention layer with a predetermined neighborhood size This neighborhood-based self-attention technique ensures that disoccluded areas are inpainted with content based only on local background areas. After warping, background-aware inpainting, and compositing refinement, the image synthesis network 246 converts the multi-resolution feature space representation into the final predicted output image. In various embodiments, image synthesis network 246 utilizes a GridNet convolutional neural network architecture comprising three rows and six columns to perform the conversion, with bilinear upsampling replacing transposed convolutions in the network. In various embodiments, all of the steps in the stereo conversion described above are differentiable. As a result, the various networks may be trained together end-to-end.

When training machine learning model 230, disparity estimation network 235 is initially trained separately. Alternatively, training engine 122 may use a previously trained version of disparity estimation network 235.

The feature extraction network 242 and image synthesis network 246 are trained by training the entire machine learning model 230 end-to-end while holding the weights of the disparity estimation network 235 fixed. The training is supervised, using either CGI images with ground-truth disparity information or left-right image pairs of a stereo video dataset with associated annotated disparity information. The supervised training optionally includes data augmentation, wherein an image pair in the stereo video dataset is flipped either horizontally or vertically (e.g., with a 0.5/0.1 probability, respectively) to generate additional left-right image pairs for training. In the case where a left-right image pair in the stereo video dataset contains only negative disparity information, an offset may be added to the right image of the pair to obtain both negative and positive disparities. The offset is determined by the median of the ground truth image disparity plus a random number between -10 and 10.

The disparity estimation network 235 generates predicted disparities which are then aligned to the dataset's left-right disparities using least squares. In some embodiments the training continues for 200,000 steps using a batch size of 4 and a learning rate of 1e-3.

In a final step, training engine 122 trains the full pipeline end-to end without fixing the weights of the disparity estimation network 235. The training is not only supervised using left-right image pairs, but also using the dataset's disparity information as an intermediate supervision signal for the disparity estimation network 235. This intermediate supervision signal can be used as a weighted term in the loss function and may be progressively faded out during training.

During training, training engine 122 calculates frame losses 280 as an L1 loss function (Equation 1) on a pixel-wise comparison of the predicted output image 250 $\hat{I}^r$ and the ground truth right frame $I^r$ with a separate disocclusion

losses 260 weight $\beta$ for the disocclusion areas $\mathcal{D}$ .

Equation (1)

$$\mathcal{L}_{L1} = \sum_{x \notin \mathcal{D}} \left| \tilde{I}^r(x) - I^r(x) \right| + \beta \sum_{x \in \mathcal{D}} \left| \tilde{I}^r(x) - I^r(x) \right|$$

Additionally, training engine 122 calculates disparity and perceptual losses 270. A perceptual loss $\mathcal{L}_F$ represents the differences in high-level semantic features between the predicted output image and the ground truth right frame of the training data. The disparity loss $\mathcal{L}_d$ measures the L1 distance between the predicted disparity values from disparity estimation network 235 and known training dataset disparity. Thus, the total loss function is:

Equation (2)

$$\mathcal{L} = \mathcal{L}_{L1} + \gamma \cdot \mathcal{L}_F + \delta \cdot \mathcal{L}_d$$

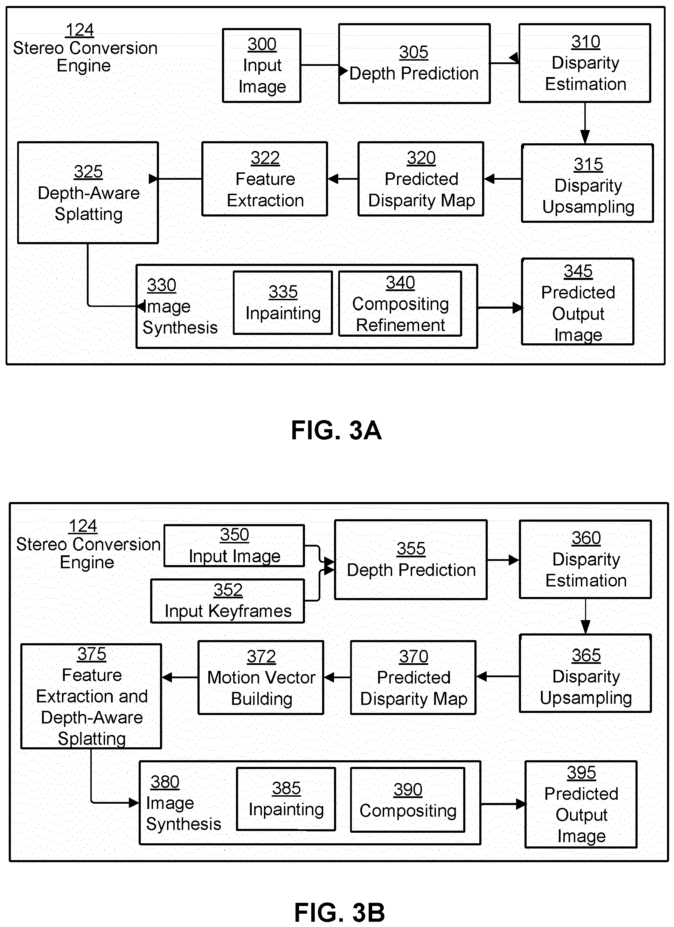

Figure 3A is a more detailed illustration of stereo conversion engine 124 of Figure 1, according to some embodiments. In these embodiments, stereo conversion engine 124 modifies a single input image 300 (e.g., a still image or a single frame from a video sequence) and generates predicted output image 345. Input image 300 and the generated predicted output image 345 form a stereo pair of images. This stereo pair, when viewed together, depicts a scene that presents the illusion of relative depth between the various objects in the scene and between the objects and the background. In various embodiments, the input image may be a left image for which a corresponding predicted right image is to be generated, or a right image for which a corresponding predicted left image is to be generated. In various other embodiments, the input may be a center image for which both left and right output images are to be generated (for example, sequentially).

Stereo conversion engine 124 includes depth prediction 305. Depth prediction 305 modifies input image 300 to produce a reduced resolution version of the input image. Depth prediction 305 further predicts the depth $d$ of objects and backgrounds in the reduced resolution version of the input image. The depth $d$ represents the distance between the camera and the object or background shown in the reduced resolution version of the input image. In various embodiments, depth prediction 305 predicts the inverse depth ($1/d$), because input images often depict background objects, such as the sun or sky, at great or near-infinite distances. The resulting inverse depth estimations are recorded on a per-pixel basis with the reduced resolution version of the input image.

Stereo conversion engine 124 performs disparity estimation 310 on the reduced resolution version of the input image and the inverse depth estimations associated with the reduced resolution version of the input image. Disparity estimation 310 aligns the pixel-wise inverse depth information for the reduced resolution version of the input image to yield disparity, i.e., the per-pixel displacement vectors. This alignment step generates a horizontal displacement vector for each pixel that is proportional to the estimated inverse depth of the pixel. In this manner, pixels representing foreground (near) objects receive greater horizontal displacement vectors representing greater disparity values relative to pixels representing distant objects. These varying horizontal displacements generate the 3D effect of perceived depth in the predicted output image 345 when viewed together with input image 300. In order to avoid excessively large values in the stereo conversion engine 124, various embodiments of disparity estimation 310 normalize the estimated disparity values. Minimum and maximum desired disparity values are predetermined, and disparity estimation 310 normalizes generated disparity values to this range by applying a linear operator. In various other embodiments, a user provides a reference disparity to disparity estimation 310 in the form of manual annotation of one or more portions of the input image 300 selected by the user (e.g., by using paint strokes, defining a bounding box, or manually selecting an object in the image). Disparity estimation 310 aligns the predicted disparity to the given reference disparity value(s) with, e.g., a least squares alignment technique.

Disparity upsampling 315 modifies the reduced resolution version of the input image and the associated disparity estimates to generate a high-resolution predicted disparity map 320. Disparity upsampling 315 performs upsampling from the low-resolution disparity estimates and the high-resolution input image. Specifically, disparity upsampling 315 uses bilateral upsampling with a neighborhood attention mechanism. In bilateral upsampling, the low-resolution disparity estimation values are resampled at a higher resolution to match the input image, using a bilateral filter to preserve object edges in high-resolution predicted disparity map 320 and to smooth flat regions of high-resolution predicted disparity map 320. The neighborhood attention mechanism favors disparity values from nearby pixels when generating disparity values for newly created pixels in high-resolution predicted disparity map 320.

Feature extraction 322 performs pyramid feature extraction on the input image at varying levels of resolution. For each level of resolution, Feature extraction 322 generates a feature vector representing the input image at that resolution. The feature vector generated for a particular resolution will differ from the feature vectors generated for different resolutions. The multiple feature vectors collectively form a multi-resolution feature vector representing the input image in feature space rather than the native representation of the input image as a matrix of RGB pixels.

Depth-aware splatting 325 warps the feature space representation of the input image according to the per-pixel displacement vectors in the predicted disparity map 320. Specifically, each pixel in the feature space representation of the input image is shifted by a displacement vector proportional to the disparity value estimated for that pixel in predicted disparity map 320.

The warped feature space representation of the input image includes disoccluded areas, where previously hidden areas of the background are exposed by the displacement of objects in the scene. These disoccluded areas are left unfilled by the warping process and are filled in during a later inpainting step. The warped representation also includes occluded areas where multiple pixels from the input image are displaced onto the same location in the feature space representation. Depth-aware splatting 325 addresses these occluded areas with a differentiable warping strategy, which includes weights to determine the ordering of multiple pixels warped to the same location. This ordering determines which of multiple pixels displaced to the same location in feature space (i.e., splatted) should remain visible. The weights are generated from the per-pixel disparity values in predicted disparity map 320. Foreground objects will have a smaller estimated depth value compared to background objects, and therefore the foreground objects' pixels were assigned larger disparity values by disparity estimation 310. Thus, the disparity values provide a direct indication of which splatted pixels are in the foreground and should remain visible and which pixels are in the background and should remain hidden. Before using the disparity values to determine the ordering of splatted pixels, depth-aware splatting 325 normalizes the disparity values to a range of [-1,1] and scales the normalized values with a parameter $\alpha$ determined during training.

Depth-aware splatting 325 applies the above warping and splatting process with every level of the multi-resolution feature vector. For each resolution level, depth-aware splatting 325 upsamples the estimated disparity values via interpolation to match the particular resolution level.

Depth-aware splatting 325 also warps the original input image at the original resolution as well as at scaled resolutions corresponding to every level of the extracted feature pyramid. This provides a user-viewable representation of the effects of the warping and splatting. Depth-aware splatting 325 further generates a warping mask that determines how many pixels were splatted to each location on the warped input image. Depth-aware splatting 325 also generates a binary disocclusion mask that determines which pixels in the warped input image represent disoccluded background areas that will need to be inpainted.

Given the warped image features and disparities on multiple resolutions, image synthesis 330 performs inpainting 335 and compositing refinement 340. Inpainting refers to the filling-in of newly disoccluded background areas that were previously hidden by one or more foreground objects. Compositing refinement reduces aliasing and sharp edges at the new boundaries between foreground objects and backgrounds in occluded areas where previously exposed background has been covered by one or more foreground objects. Inpainting 335 performs background-aware inpainting using local multi-scale self-attention by applying a neighborhood-based self-attention technique to every resolution layer. In various embodiments, inpainting 335 includes a single-headed attention layer with a predetermined neighborhood size. This neighborhood-based self-attention technique ensures that disoccluded areas are inpainted with content based only on local background areas.

After warping, background-aware inpainting, and compositing refinement, image synthesis 330 converts the multi-resolution feature space representation into the final predicted output image 345. In various embodiments, image synthesis 330 utilizes a GridNet convolutional neural network architecture comprising three rows and six columns to perform the conversion, with bilinear upsampling replacing transposed convolutions in the network.

Figure 3B is a more detailed illustration of stereo conversion engine 124 of Figure 1, according to some embodiments. In these embodiments, stereo conversion engine 124 modifies input image 350 (e.g., a single 2D video frame) and input keyframes 352 and generates a predicted output image 395. Input image 350 and the generated predicted output image 395 form a stereo pair of images. In various embodiments, input image 350 may be a left image for which a corresponding predicted right image is to be generated, or a right image for which a corresponding predicted left image is to be generated. In various other embodiments, the input may be a center image for which both left and right output images are to be generated (for example, sequentially).

Input keyframes 352 are video frames that are temporally related to input image 350 (i.e., input keyframes 352 precede or follow input image 350 in a sequence of video frames). In some embodiments, input keyframes 352 are a fixed set of neighboring video frames $\{I^l_{t+k} \mid k \in [-K; K]\}$, where $I^l_{t=0}$ denotes input image 350. In other embodiments, input keyframes 352 represent frames at exponentially increasing distances from input image 350, e.g., $\{I^l_{t+k} \mid k \in [-8, -4, -2, -1, 0, 1, 2, 4, 8]\}$. Input keyframes 352 provide temporal context for input image 350, improving accuracy and stability in predicted output image 395.

Stereo conversion engine 124 performs stereo conversion on a video sequence by processing multiple sequential input images 350, along with the selected keyframes 352 associated with each input image 350.

Stereo conversion engine 124 includes depth prediction 355. Depth prediction 305 modifies input image 350 to produce a reduced resolution version of the input image. Depth prediction 355 further predicts the depth d of objects and backgrounds in the reduced resolution version of the input image. In various embodiments, depth prediction 355 predicts the inverse depth (1/d) as discussed previously in the description of Figure 3A. The resulting inverse depth estimations are recorded on a per-pixel basis with the reduced resolution version of the input image .

For all given frames (i.e., input image 350 and input keyframes 352), depth prediction 355 further generates a scene point cloud by analyzing changing or static object and background positions across multiple frames. Depth prediction 355 further estimates camera poses and positioning. To estimate camera poses and position, depth prediction 355 may use, for example, a structure-from-motion technique. Depth prediction 355 generates a sparse depth rendering of the point cloud for each time step represented by input image 350 and input keyframes 352. Depth prediction 355 generates a reduced-resolution representation of input image 350 and of each keyframe 352 containing inverse depth values for each pixel.

Stereo conversion engine 124 performs disparity estimation 360 on the reduced resolution version of the input image and the inverse depth estimations associated with the reduced resolution version of the input image. Similar to disparity estimation 310 described above, disparity estimation 360 aligns the pixel-wise inverse depth information for the reduced resolution version of the input image to yield a normalized predicted disparity value for each pixel. In various other embodiments, a user provides a reference disparity to disparity estimation 360 in the form of manual annotation of one or more portions of the input image 350 selected by the user. Disparity estimation 360 aligns the predicted disparity to the given reference disparity value(s) with, e.g., a least squares alignment technique.

As discussed previously in the description of disparity upsampling 315, disparity upsampling 365 modifies the reduced resolution version of the input image and the associated disparity estimates to generate a high-resolution predicted disparity map 370. Disparity upsampling 365 performs upsampling from the low-resolution disparity estimates and the high-resolution input image to generate the high-resolution predicted disparity map 370.

Stereo conversion engine 124 generates a predicted output image 395 from an input image 350. As an example, input image 350 may be a left image for a particular time instance $t$ ( $I^l_t$ ). Predicted output image 395 may be a corresponding right image ( $I^r_t$ ) such that input image 350 and predicted output image 395 form a stereo pair. Stereo conversion engine 124 may also consider additional images from other time instances (i.e., keyframes). In the following description, stereo conversion engine 124 considers only a single additional image ( $I^l_{t-1}$ ), but any arbitrary number of additional images may be considered.

Stereo conversion engine 124 warps information from a keyframe (in this case, $I^l_{t-1}$ ) to the predicted output image 395 (in this case, $I^r_t$ ) by generating motion vectors at motion vector building 372. In some embodiments, motion vector building 372 generates forward vectors based on forward optical flow between keyframe $I^l_{t-1}$ and input image $I^l_t$ and the disparity values for time instance $t$ from predicted disparity map 370. The forward optical flow includes pixelwise vectors representing the motion of objects depicted in a scene between time instance $t-1$ and time instance $t$. Motion vector building 372 further backwards-warps the disparity values for time instance $t$ to time instance $t-1$. Motion vector building 372 then adds the warped disparity values to the optical flow vectors, yielding forward vectors from $I^l_{t-1}$ to $I^r_t$ .

In other embodiments, motion vector building 372 generates backward vectors based on backward optical flow between input frame $I^l_t$ and keyframe $I^l_{t-1}$ . Backward optical flow includes pixel-wise vectors representing the motion of objects depicted in a scene between time instance $t$ and time instance $t-1$. Motion vector building 372 then warps this optical flow to frame $I_t^r$ . Motion vector building 372 also generates backward (right-to-left) disparity values by executing stereo conversion engine 124 on the input image as discussed above in reference to Figure 3A and calculating the negative of the warped per-pixel disparity values obtained after inpainting 335 of figure 3A. Motion vector building 372 then adds the warped right-to-left disparity values to the backward optical flow, yielding backward vectors.

In yet other embodiments, motion vector building 372 generates directly predicted vectors based on an estimate of the output image generated from an input image as discussed above in reference to Figure 3A. Given the estimated output image, motion vector building 372 estimates the optical flow directly between the input image and the estimate output image and calculates forward or backward vectors.

Feature extraction and depth-aware splatting 375 performs pyramid feature extraction on input image 350 and on each of the keyframes 352 at varying levels of resolution. For each level of resolution, Feature extraction and depth-aware splatting 375 generates a feature vector representing the input image or the keyframe at that resolution. The multiple feature vectors collectively form a multi-resolution feature vector representing the input image or keyframe in feature space.

Feature extraction and depth-aware splatting 375 warps the feature space representation of the input image according to the motion vectors generated by motion vector building 372. Specifically, each pixel in the feature space representation of the input image is shifted by the value of the generated motion vector. In various embodiments that include multiple keyframes 352, motion vectors are generated as described above between each keyframe 352 and the input image 350. Feature extraction and depth-aware splatting 375 then warps the feature space representation of the input image based on each of these multiple motion vectors.

The warped feature space representation of the input image includes disoccluded areas that are left unfilled by the warping process and are filled in during a later inpainting step. The warped feature space representation also includes occluded areas where multiple pixels from the input image are displaced onto the same location in the feature space representation. Feature extraction and depth-aware splatting 375 addresses these occluded areas with a differentiable warping strategy, which includes weights to determine the ordering of multiple pixels warped to the same location. The weights are generated from the per-pixel disparity values in predicted disparity map 370 in the same manner as discussed previously in the description of depth-aware splatting 325. This weighted ordering determines which of multiple pixels displaced to the same location in feature space (i.e., splatted) should remain visible.

Feature extraction and depth-aware splatting 375 performs the above warping and splatting process with every level of the multi-resolution feature vector. For each resolution level, feature extraction and depth-aware splatting 375 upsamples the estimated disparity values via interpolation to match the particular resolution level.

Feature extraction and depth-aware splatting 375 also warps the original input image at the original resolution as well as at scaled resolutions corresponding to every level of the extracted feature pyramid. This provides a user-viewable representation of the effects of the depth-aware warping and splatting. Feature extraction and depth-aware splatting 375 further generates a warping mask that determines how many pixels were splatted to each location on the warped input image. Feature extraction and depth-aware splatting 375 also generates a binary disocclusion mask that determines which pixels in the warped input image represent disoccluded background areas that will need to be inpainted.

With the warped image features and disparities on multiple resolutions, image synthesis 380 performs inpainting 385 and compositing refinement 390. The inpainting and compositing refinement fills in newly disoccluded background areas that were previously hidden and reduces aliasing and sharp edges at the new boundaries between foreground objects and backgrounds in occluded areas. Inpainting 385 performs background-aware inpainting using local multi-scale self-attention by applying the neighborhood-based self-attention technique as inpainting 335 discussed previously. Further, inpainting 385 analyzes input image 350 and keyframes 352 to find occluded background areas in input image 350 that were previously visible in one or more of keyframes 352 so that these previously visible areas may be used to refine the inpainting. For instance, a particular section of background may be visible in keyframe 352 representing time instance *t-1* but is occluded in input image 350 representing time instance *t*. Inpainting 385 may determine that the particular section of background is newly disoccluded in the predicted output image 395 and may use the background information from the keyframe representing time instance *t-1* in order to more accurately inpaint the newly disoccluded area.

After warping, background-aware inpainting, and compositing refinement, image synthesis 380 converts the multi-resolution feature space representations for the input image 350 and the keyframes 352 into the final predicted output image 395. In various embodiments, image synthesis 380 utilizes a GridNet convolutional neural network architecture comprising three rows and six columns to perform the conversion, with bilinear upsampling replacing transposed convolutions in the network.

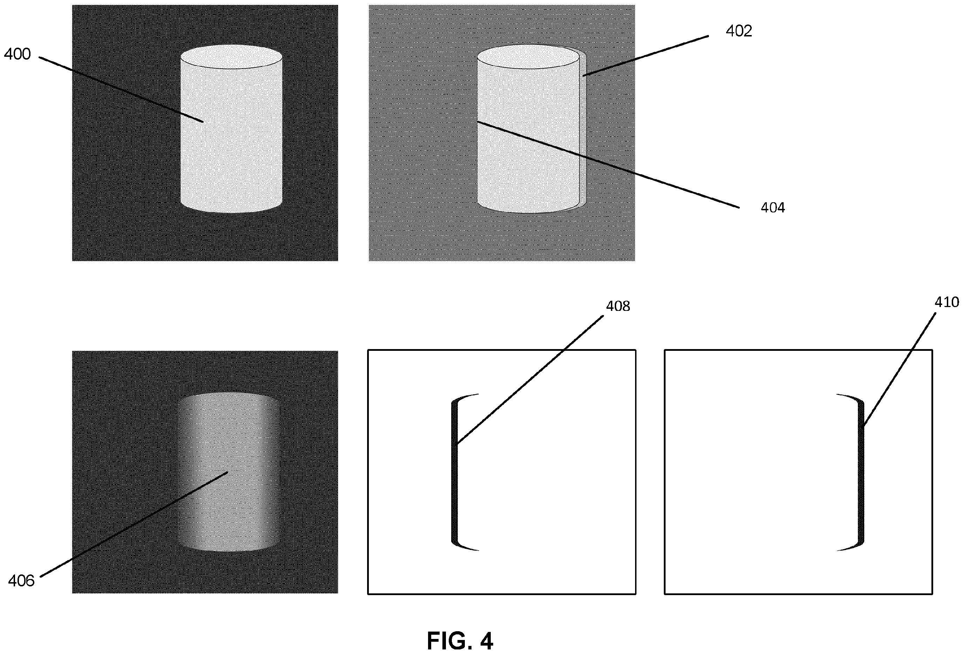

Figure 4 depicts an exemplary input image and the results of various warping and disparity estimation processes applied to the input image, according to some embodiments. The upper left panel of Figure 4 depicts an input image 400. In various embodiments, input image 400 may be, e.g., a still image or a single frame of a 2D video sequence. Input image 400 depicts an object in the foreground of the image, as well as a background that is partially occluded (blocked) by the object.

The upper right panel of Figure 4 shows the results of depth-aware splatting 325 as previously described in the discussion of Figure 3A. Depth-aware splatting 325 offsets each pixel in the feature space representation of input image 400 by an amount proportional to the estimated disparity value for that pixel. The pixel offsets generated by depth-aware splatting 325 create occlusion 404 and disocclusion 402. Depth-aware splatting 325 correctly places foreground pixels in front of the newly occluded background pixels, such that the boundary edge between the foreground object and the background is free of distortions. The boundary may contain sharp edges and aliasing artifacts which are addressed subsequently in compositing refinement 340 as described previously in the discussion of Figure 3A. Disocclusion 402 correctly depicts pixels representing newly exposed regions of the background. Inpainting 335 fills the disoccluded regions using only background pixels as discussed previously.

The lower left panel of Figure 4 shows a disparity representation 406 of the predicted disparity map 320. As discussed previously in the description of Figure 3A, each pixel of disparity map 320 contains an estimated disparity value. Depth-aware splatting 325 warps each pixel of the input image feature space representation by an offset that is proportional to the disparity value associated with the pixel. In disparity representation 406, lighter regions represent foreground pixels that are closer to the viewer and have larger estimated disparity values, while darker regions represent background pixels that are further from the viewer and have smaller estimated disparity values. In various embodiments, disparity values in disparity representation 406 may be depicted using any suitable annotation scheme, _e.g._, darker pixels representing larger estimated disparity values and lighter pixels representing smaller estimated disparity values. Disparity representation 406 may also use different colors to represent various ranges of disparity values.

The lower middle panel of Figure 4 shows warping mask 408. As described previously in the discussion of Figure 3A, depth-aware splatting 325 generates warping mask 408. Warping mask 408 represents newly occluded regions in the warped input image 400, as well as how many pixels were splatted to each location on the warped input image.

The lower right panel of Figure 4 shows binary disocclusion mask 410. Depth-aware splatting 325 generates a binary disocclusion mask 410 that records which pixels in the warped input image represent newly disoccluded background areas that will be filled using background pixels as previously described in the discussion of inpainting 335.

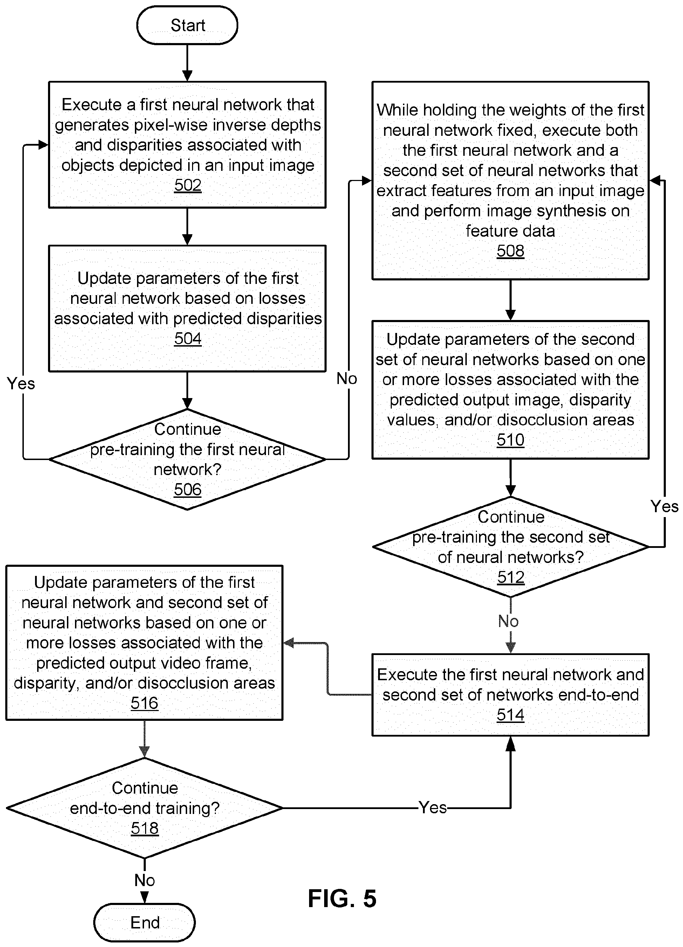

Figure 5 is a flow diagram of method steps for training a deep learning model to perform stereo conversion, according to various embodiments. Although the method steps are described in conjunction with the systems of Figures 1-3, persons skilled in the art will understand that any system configured to perform the method steps in any order falls within the scope of the present disclosure.

As shown, in operation 502, training engine 122 executes a first neural network to generate inverse depths associated with objects in an input image. In various embodiments, the input image may be a still image or a single frame from a video sequence. Training engine 122 generates an inverse depth value associated with each pixel of the input image. Training engine 122 further generates a disparity value associated with each pixel of the input image.

In operation 504, training engine 122 updates the parameters of the first neural network using backpropagation and disparity loss $\mathcal{L}_d$. Disparity loss $\mathcal{L}_d$ measures the L1 distance between the predicted disparity values from the first neural network and known training dataset disparity values.

In operation 506, training engine 122 compares the disparity loss from the first neural network to a first predetermined threshold. If the first predetermined threshold has not been met, then training engine 122 returns to operation 502 and continues training the first neural network until the first predetermined threshold is met.

If the predetermined threshold has been met, then training engine 122 proceeds to operation 508. In operation 508, training engine 122 pre-trains a second set of neural networks while holding the trained weights of the first neural network constant. Training engine 122 performs supervised training on the second set of neural networks using a dataset of left-right image pairs and disparity values associated with the image pairs. As discussed above in the descriptions of Figures 3A and 3B, the second set of neural networks perform feature extraction using the input image and the disparity values associated with the input image. The second set of neural networks further performs depth-aware splatting, background-aware inpainting and compositing refinement to generate a predicted output image.

In operation 510, training engine 122 updates parameters of the second set of neural networks using backpropagation. As discussed previously in the description of Figure 2, training engine 122 calculates frame losses as an L1 loss function $\mathcal{L}_{L1}$ on a pixel-wise comparison of the predicted output image and the ground truth right frame of the image pair training data. Additionally, training engine 122 calculates disparity and perceptual losses. A perceptual loss $\mathcal{L}_F$ represents the differences in high-level semantic features between the predicted output image and the ground truth right frame of the training data. The disparity loss $\mathcal{L}_d$ measures the L1 distance between the predicted disparity values from the first neural network and the known training dataset disparity. Perceptual loss $\mathcal{L}_F$ and disparity loss $\mathcal{L}_d$ each have a trainable weight parameter ($\gamma$ and $\delta$, respectively) Thus, the total loss function is given by Equation (2) as previously discussed in the description of Figure 2:

## Equation (2)

$$\mathcal{L} = \mathcal{L}_{L1} + \gamma \cdot \mathcal{L}_F + \delta \cdot \mathcal{L}_d$$

In operation 512, training engine 122 compares the total loss function given by Equation (2) to a second predetermined threshold. If the second predetermined threshold has not been met, training engine 122 continues training the second set of neural networks until the second predetermined threshold is met.

In operation 514, training engine 122 executes the first neural network and the second set of neural networks in an end-to-end manner. In contrast to operation 508 discussed above, the parameters of the first neural network are no longer fixed.

Next, in operation 516, training engine 122 performs supervised training using a dataset of left-right image pairs, along with ground truth disparity values associated with the dataset image pairs. In some embodiments, these ground truth disparity values may be used as an intermediate supervision signal for training the first neural network. This intermediate supervision signal may be progressively faded out during training. All functions and transformations in the first neural network and the second set of neural networks are fully differentiable. Accordingly, training engine 122 trains both the first neural network and the second set of neural networks end-to-end using backpropagation. Training engine 122 generates frame, perceptual, and disparity losses as well as a total loss function. These loss functions are the same as those discussed previously in the description of operation 510.

In operation 518, training engine 122 compares the total loss function determined in operation 516 to a third predetermined threshold. If the third predetermined threshold has not been met, training engine 122 continues training the first neural network and the second set of neural networks until the third predetermined threshold is met and the end-to-end training terminates.

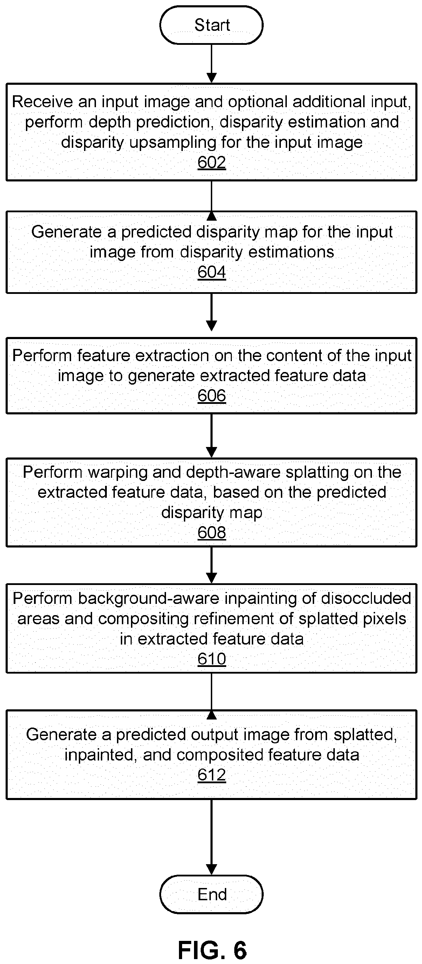

Figure 6 is a flow diagram of method steps for performing stereo conversion on a single input image, according to various embodiments. Although the method steps are described in conjunction with the systems of Figures 1-3, persons skilled in the art will understand that any system configured to perform the method steps in any order falls within the scope of the present disclosure.

As shown, in operation 602, stereo conversion engine 124 receives an input image. In various embodiments, the input image may be a still image or a single frame from a video sequence. In various embodiments, stereo conversion engine further accepts additional user input representing reference disparity information in the form of manual annotation of one or more portions of the input image selected by the user (e.g., by using paint strokes, defining a bounding box, or manually selecting an object in the image).

In operation 604, stereo conversion engine 124 generates a predicted disparity map for the input image. Stereo conversion engine 124 converts the input image into a low-resolution representation of the input image and executes a first trained neural network to perform depth prediction for various objects and backgrounds depicted in the low-resolution representation. Stereo conversion engine 124 then calculates and stores an inverse depth value associated with each pixel of the low-resolution representation of the input image. Stereo conversion engine 124 estimates a disparity value for each pixel that is proportional to the inverse depth value associated with the pixel. The estimated disparity values are aligned to the additional user input, if available, by e.g., a least-squares alignment method. These estimated disparity values represent the necessary horizontal offset for each pixel to be applied in the subsequent warping and splatting operations. Stereo conversion engine 124 then upsamples the disparity values associated with the low-resolution representation of the input image to the full resolution of the input image as discussed previously in the description of Figure 3A. Stereo conversion engine 124 converts the upsampled disparity estimates into a predicted disparity map at the full resolution of the input image. Each pixel of the disparity map has an associated disparity value, with pixels representing foreground objects having larger associated disparity values, while background objects have smaller associated disparity values.

In operation 606, stereo conversion engine 124 performs pyramid feature extraction on the input image at varying levels of resolution. For each level of resolution, stereo conversion engine 124 generates a vector representing features of the input image at the selected resolution. The feature vectors generated for various resolutions will differ from one another. The multiple feature vectors collectively form a multi-resolution feature vector representing the input image in feature space rather than the native representation of the input image as a matrix of RGB pixels.

Next, at operation 608, stereo conversion engine 124 uses a second set of neural networks to modify the feature space representation on the input image by performing warping and depth-aware splatting on the extracted feature data. Each pixel of the feature space representation is warped (offset) by an amount proportional to the disparity value associated with that pixel. Because pixels at varying depths have different disparity values, multiple pixels may be warped onto the same location in the modified feature space representation, a process described as splatting. Splatting occurs at the boundary between a foreground object and a background object where both foreground and background pixels are warped to the same location. Stereo conversion engine 124 determines which splatted pixels should remain visible in the modified feature space representation based on the disparity values associated with each warped pixel. Pixels with relatively greater associated disparity values represent objects closer to the viewer and should remain visible. Splatted pixels with a relatively lower disparity value represent background objects that are more distant from the viewer and should remain hidden in the modified feature space representation.

In operation 610, stereo conversion engine 124 further modifies the feature space representation by performing background-aware inpainting of disoccluded areas. Disoccluded areas are regions in the input image where background objects were previously occluded by one or more foreground objects but are made visible by the warping process. Stereo conversion engine 124 intelligently fills in (inpaints) these regions solely using information from the image background as discussed previously in the description of Figure 3A. Stereo conversion engine 124 further performs compositing refinement of splatted pixels to remove sharp edges and aliasing artifacts.

In operation 612, stereo conversion engine 124 converts the warped, splatted, and inpainted feature space representation into a predicted output image. The predicted output image, when viewed together with the input image, form a stereo pair that presents the illusion of differing relative depths for the various objects depicted in the image.

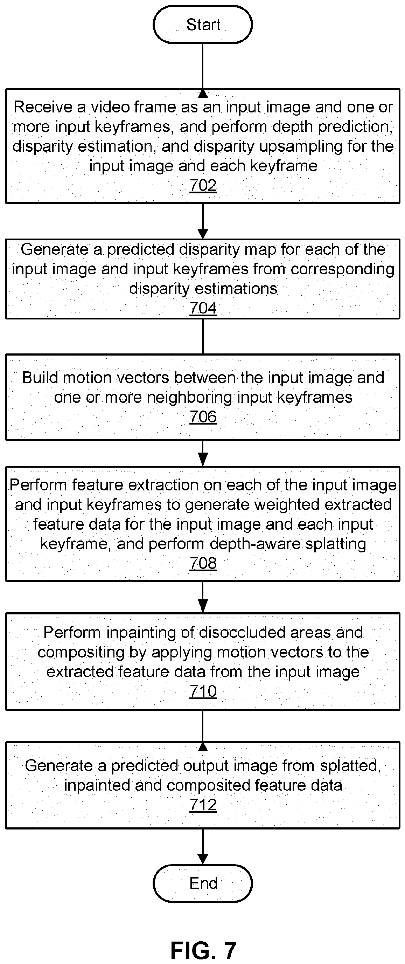

Figure 7 is a flow diagram of method steps for performing stereo conversion on a single video frame as an input image using neighboring video frames as input keyframes, according to various embodiments. Although the method steps are described in conjunction with the systems of Figures 1-3, persons skilled in the art will understand that any system configured to perform the method steps in any order falls within the scope of the present disclosure.

As shown, in operation 702, stereo conversion engine 124 receives as an input image a frame from a video sequence, as well as one or more neighboring video frames as input keyframes. In various embodiments, the input image may be a left image for which a corresponding predicted right image is to be generated, or a right image for which a corresponding predicted left image is to be generated. In various other embodiments, the input may be a center image for which both left and right output images are to be generated (for example, sequentially).

Input keyframes are video frames that are temporally related to the input image (i.e., input keyframes precede or follow the input image in a sequence of video frames). In some embodiments, the input keyframes are a fixed set of neighboring video frames $\{I^l_{t+k} \mid k \in [-K; K]\}$, where $I^l_{t=0}$ denotes the input image. In other embodiments, the input keyframes represent frames at exponentially increasing distances from the input image, e.g., $\{I^l_{t+k} \mid k \in [-8, -4, -2, -1, 0, 1, 2, 4, 8]\}$. The input keyframes provide temporal context for the input image, improving accuracy and stability in the predicted output image. Stereo conversion engine 124 performs stereo conversion on a video sequence by processing multiple sequential input images, along with the selected input keyframes associated with each input image. In the following description, stereo conversion engine 124 considers only a single additional frame ($I^l_{t-1}$), but any arbitrary number of additional frames may be considered.

In operation 704, stereo conversion engine 124 generates a high-resolution predicted disparity map for the input image and for each input keyframe. Stereo conversion engine 124 utilizes a first neural network to perform depth prediction by first generating a reduced-resolution version of the input image and of each input keyframe. Stereo conversion engine 124 then predicts the depth of various objects and backgrounds in the image. In various embodiments, stereo conversion engine 124 predicts the inverse depth $1/d$ as previously discussed in the description of Figure 3B. Stereo conversion engine 124 further generates a scene point cloud by analyzing changing or static object and background positions across the input frame and the one or more input keyframes. Stereo conversion engine 124 estimates camera poses and positioning using e.g., a structure-from-motion technique. Stereo conversion engine 124 generates a sparse depth rendering of the point cloud for each time step represented by the input image and the input keyframes. The resulting inverse depth estimations are recorded on a per-pixel basis with the reduced-resolution version of the input image and with the reduced-resolution version of each input keyframe.

Stereo conversion engine 124 performs disparity estimation on the reduced-resolution version of the input image and the inverse depth estimations associated with each pixel in the reduced-resolution version of the input image. As previously discussed in the description of Figure 3B, stereo conversion engine 124 aligns the pixel-wise inverse depth information for the reduced-resolution version of the input image to yield a normalized predicted disparity value for each pixel. In various other embodiments, a user provides a reference disparity to stereo conversion engine 124 in the form of manual annotation of one or more portions of the input image 350 selected by the user. Stereo conversion engine 124 aligns the predicted disparity to the given reference disparity value(s) with, e.g., a least squares alignment technique. Stereo conversion engine 124 also performs disparity estimation for each of the input keyframes in the same manner. For the input image and each input keyframe, stereo conversion engine 124 performs upsampling on the associated low-resolution disparity estimates. Stereo conversion engine 124 generates a predicted disparity map for the input image and each input keyframe by associating the upsampled disparity estimates with the corresponding high-resolution input image or keyframe.

In operation 706, stereo conversion engine 124 generates motion vectors to warp information from an input keyframe (in one embodiment, $I_{t-1}^l$) to the predicted output image $I_t^r$. In some embodiments, Stereo conversion engine 124 generates forward vectors based on forward optical flow between input keyframe $I_{t-1}^l$ and input image $I_t^l$ and the disparity values for time instance $t$ from predicted disparity map. The forward optical flow includes pixel-wise vectors representing the motion of objects depicted in a scene between time instance $t-1$ and time instance $t$. Stereo conversion engine 124 further backwards-warps the disparity values for time instance $t$ to time instance $t-1$. Stereo conversion engine 124 then adds the warped disparity values to the optical flow vectors, yielding forward vectors from $I_{t-1}^l$ to $I_t^r$.

In other embodiments, stereo conversion engine 124 generates backward vectors based on backward optical flow between input image $I_t^l$ and input keyframe $I_{t-1}^l$. Backward optical flow includes pixel-wise vectors representing the motion of objects depicted in a scene between time instance $t$ and time instance $t$-1. Stereo conversion engine 124 then warps this optical flow to frame $I_t^r$. Stereo conversion engine 124 also generates backward (right-to-left) disparity values by executing stereo conversion engine 124 on the input image as discussed above in reference to Figure 3A and calculating the negative of the warped per-pixel disparity values obtained after inpainting 335 of figure 3A. Stereo conversion engine 124 then adds the warped right-to-left disparity values to the backward optical flow, yielding backward vectors.

In yet other embodiments, stereo conversion engine 124 generates directly predicted vectors based on an estimate of the output image $I_t^r$ generated from a single input image as discussed above in reference to Figure 3A. Given the estimate of $I_t^r$, stereo conversion engine 124 estimates the optical flow directly between $I_t^r$ and $I_{t-1}^l$ and calculates forward or backward vectors.

In operation 708, stereo conversion engine 124 performs pyramid feature extraction on the input image and on each of the input keyframes at varying levels of resolution. For each level of resolution, stereo conversion engine 124 generates a feature vector representing the input image or the input keyframe at that resolution. The multiple feature vectors collectively form a multi-resolution feature vector representing the input image or input keyframe in feature space.

Stereo conversion engine 124 executes a second set of trained neural networks to warp the feature space representation of the input image according to the motion vectors generated as previously described. Specifically, each pixel in the feature space representation of the input image is shifted by the value of the generated motion vector. In various embodiments that include multiple input keyframes, motion vectors are generated between each input keyframe and the input image. Stereo conversion engine 124 then warps the feature space representation of the input image based on each of these multiple motion vectors.

As discussed previously in the description of Figure 6, multiple pixels may be warped to the same location (splatted) in the feature space representation of the input image. Stereo conversion engine 124 addresses these occluded pixels with a differentiable depth-aware warping strategy that includes weights to determine the ordering of multiple pixels that are warped to the same location. This weighted ordering is determined from the estimated disparity values for each of the splatted pixels and determines which pixels remain visible in the predicted output image. Stereo conversion engine 124 performs the above warping and splatting process with every level of the multi-resolution feature vector representation of the input image. For each resolution level, stereo conversion engine 124 upsamples the estimated disparity values via interpolation to match the particular resolution level.

In operation 710, stereo conversion engine 124 performs background-aware inpainting and compositing refinement with the warped image features and disparities on multiple resolutions. The inpainting and compositing refinement fills in newly disoccluded background areas that were previously hidden and reduces aliasing and sharp edges at the new boundaries between foreground objects and backgrounds in occluded areas. Stereo conversion engine 124 performs background-aware inpainting using local multi-scale self-attention as discussed previously in the description of Figure 3A. Further, stereo conversion engine 124 analyzes the input image and the input keyframes to find occluded background areas in the input image that were previously visible in one or more of the input keyframes so that these areas may be used to refine the inpainting. For instance, a particular section of background may be visible in the input keyframe representing time instance *t-1* but is occluded in the input image representing time instance *t*. Stereo conversion engine 124 may determine that the particular section of background is newly disoccluded in the predicted output image and may use the background information from the input keyframe representing time instance *t-1* in order to more accurately inpaint the newly disoccluded area.

In operation 712, after warping, background-aware inpainting, and compositing refinement, stereo conversion engine 124 converts the multi-resolution feature space representations for the input image and the input keyframes into the final predicted output image.

In sum, a stereo conversion engine processes an input image of video content to generate a corresponding output image such that the input image and the corresponding output image form a stereo representation of the contents of the input image. All of the functions and transformations used by the stereo conversion engine are fully differentiable, which aids in end-to-end training of the underlying stereo conversion model via backpropagation. In operation, the stereo conversion engine performs disparity estimation on an input image by calculating pixel-wise inverse depth on a reduced resolution version of the input frame, and then performing an alignment step to yield disparity values, *i.e.*, the per-point displacement vectors in pixels. When calculating disparity values for the input image, either a range of possible disparity values is provided and the calculated values are normalized to fall within this range, or a reference disparity is used to adjust the calculated values. The reference disparity may be in the form of ground truth disparity (used during training) or user-suggested disparity values supplied at inference time. A user may also provide additional artistic control input, such as selecting important objects within the input frame, identifying points in the input frame that correspond to non-moving background areas, or providing camera parameters or camera positioning information. The calculated and adjusted/normalized disparity values are then used to generate a high-resolution disparity estimation. The stereo conversion engine further extracts features from the input frame at various resolutions.

The stereo conversion engine performs feature warping, depth-aware splatting, and inpainting in feature space based on the extracted features and the high-resolution disparity estimation. Splatting refers to mapping (warping) multiple pixels in the feature space representation of the input image via their associated displacement vectors onto the same pixel. The splatting is depth-aware because the stereo conversion engine determines which splatted pixels should appear in the foreground of the predicted target frame based on the estimated disparity values. The stereo conversion engine inpaints disoccluded areas in the feature space representation of the input image in a background-aware manner. These disoccluded areas are filled in solely with pixels and textures from the image background. The stereo conversion engine generates the predicted output image from the warped, splatted, and inpainted feature space image representation.

The processes described above to generate a single predicted output image from a single input frame are extensible to accept multiple input images and generate multiple predicted output images. Using the information contained in multiple adjacent, neighboring, or near-neighboring input images to guide the stereo conversion process allows the stereo conversion engine to enhance temporal consistency across multiple predicted output images, improving the viewer's perceived illusion of depth in the stereo pair comprising the input image and the predicted output image.

One technical advantage of the disclosed technique relative to the prior art is that the functions and transformations used in the various stereo conversion steps are fully differentiable, allowing for improved end-to-end training of the disclosed stereo conversion model. Further, the disclosed technique allows for optional artistic control inputs from a user, as well as the option of considering additional inputs other than the input frame. Further, the disclosed technique incorporates predicted disparities from the input image in order to perform depth-aware splatting and inpainting, wherein disparity information from a known reference input frame is used when generating and synthesizing a corresponding output image. The optional use of multiple input images also allows the disclosed technique to enhance temporal consistency across multiple predicted output video images. These technical advantages provide one or more technological improvements over prior art approaches.

1. In various embodiments, a computer-implemented method comprises generating, using one or more machine learning models, a predicted disparity map for an input image based on one or more depth values associated with pixels within the input image, extracting feature data from the input image, wherein the feature data represents the pixels within the input image, applying an offset to each pixel represented by the feature data based on the predicted disparity map, identifying a plurality of offset pixels represented by the feature data that are offset to a same pixel location, assigning, based on the predicted disparity map, a visibility value to each of the plurality of offset pixels, modifying, based on the visibility values, each of the plurality of offset pixels such that one of the plurality of offset pixels is visible and the others of the plurality of offset pixels are hidden, and generating an output image based on the feature data and the modified plurality of offset pixels such that the input image and the output image form a stereo pair of images.

2. The computer-implemented method of clause 1, wherein generating the predicted disparity map comprises generating a reduced-resolution version of the input image, assigning pixel-wise depth values to pixels representing foreground and background objects depicted in the reduced-resolution version of the input image, assigning pixel-wise predicted disparity values in the disparity map based on the depth values such that pixels in the predicted disparity map representing foreground objects are assigned greater disparity values than pixels representing background objects, and upsampling the pixel-wise disparity map values associated with the reduced-resolution version of the input image to an original resolution of the input image.

3. The computer-implemented method of clause 1 or 2, further comprising receiving one or more user annotations for the input image, each user annotation comprising an identification of a selected portion of the input image and a ground truth disparity value associated with the selected portion and aligning the pixel-wise predicted disparity values for the selected portion of the input image with the associated ground truth disparity values for the selected portion of the input image.

4. The computer-implemented method of any of clauses 1-3, wherein each of the one or more user annotations for the input image comprises at least one of a bounding box encompassing a portion of the input image, one or more brush strokes denoting portions of the input image, or a manual selection of an object depicted in the input image.

5. The computer-implemented method of any of clauses 1-4, wherein modifying each of the plurality of offset pixels comprises comparing the associated disparity map values for the plurality of offset pixels and rendering the one of the plurality of offset pixels as visible based on the one of the plurality of offset pixels having the highest disparity map value while hiding the pixels at the same pixel location that have lower disparity map values.

6. The computer-implemented method of any of clauses 1-5, wherein all of the functions and transformations performed by the one or more machine learning models are fully differentiable.

7. The computer-implemented method of any of clauses 1-6, further comprising generating a disocclusion mask representing pixel locations in the extracted feature data where portions of an image background are disoccluded after applying the offset to each offset pixel represented by the feature data, filling in the pixel locations represented by the disocclusion mask with image data selected from the image background, and generating the output image based on the modified plurality of offset pixels and the filled-in pixel locations represented by the disocclusion mask.

8.. The computer-implemented method of any of clauses 1-7, wherein the image data used to fill in pixel locations represented by the disocclusion mask is selected by applying a neighborhood-based self-attention technique.

9.. The computer-implemented method of any of clauses 1-8, wherein the input image is a single frame of a video sequence, the method further comprising receiving as input one or more keyframes, each keyframe comprising a frame from the video sequence that is located at a temporal distance from the input image, generating a predicted disparity map for each of the keyframes based on one or more depth values associated with pixels within the keyframe, building, based on the predicted disparity map for each of the keyframes, motion vectors between the input image and each of the keyframes describing the change in location of objects depicted in the keyframe and the input image, extracting keyframe feature data from each of the keyframes, and applying the motion vectors to the extracted keyframe feature data for each of the keyframes to guide the filling in of the pixel locations represented by the disocclusion mask.

10. The computer-implemented method of any of clauses 1-9, wherein a plurality of keyframes are received as input and the plurality of keyframes are selected at exponentially increasing temporal distances from the input image.

11. In various embodiments, one or more non-transitory computer-readable media store instructions that, when executed by one or more processors, cause the one or more processors to perform the steps of generating, using one or more machine learning models, a predicted disparity map for an input image based on one or more depth values associated with pixels within the input image, extracting feature data from the input image, wherein the feature data represents the pixels within the input image, applying an offset to each pixel represented by the feature data based on the predicted disparity map, identifying a plurality of offset pixels represented by the feature data that are offset to a same pixel location, assigning, based on the predicted disparity map, a visibility value to each of the plurality of offset pixels, modifying, based on the visibility values, each of the plurality of offset pixels such that one of the plurality of offset pixels is visible and the others of the plurality of offset pixels are hidden, and generating an output image based on the feature data and the modified plurality of offset pixels such that the input image and the output image form a stereo pair of images.

12. The one or more non-transitory computer-readable media of clause 11, wherein the instructions further cause the one or more processors to perform the steps of generating a reduced-resolution version of the input image, assigning pixel-wise depth values to pixels representing foreground and background objects depicted in the reduced-resolution version of the input image, assigning pixel-wise predicted disparity values in the disparity map based on the depth values such that pixels in the predicted disparity map representing foreground objects are assigned greater disparity values than pixels representing background objects, and upsampling the pixel-wise disparity map values associated with the reduced-resolution version of the input image to an original resolution of the input image.

13. The one or more non-transitory computer-readable media of clause 11 or 12 wherein the instructions further cause the one or more processors to perform the steps of receiving one or more user annotations for the input image, each user annotation comprising an identification of a selected portion of the input image and a ground truth disparity value associated with the selected portion, and aligning the pixel-wise predicted disparity values for the selected portions of the input image with the associated ground truth disparity values for the selected portions of the input image.

14. The one or more non-transitory computer-readable media of clauses 11-13, wherein the instructions to perform the steps of modifying each of the plurality of offset pixels further cause the one or more processors to perform the steps of comparing the associated disparity map values for the plurality of offset pixels, and rendering the one of the plurality of offset pixels as visible based on the one of the plurality of offset pixels having the highest disparity map value while hiding the pixels at the same pixel location that have lower disparity map values.

15. The one or more non-transitory computer-readable media of any of clauses 11-14, wherein the instructions further cause the one or more processors to perform the steps of generating a disocclusion mask representing pixel locations in the extracted feature data where portions of an image background are disoccluded after applying the offset to each offset pixel represented by the feature data, filling in the pixel locations represented by the disocclusion mask with image data selected from the image background, and generating the output image based on the modified plurality of offset pixels and the filled-in pixel locations represented by the disocclusion mask.

16. The one or more non-transitory computer-readable media of any of clauses 11-15 wherein the input image is a single frame of a video sequence, the instructions further causing the one or more processors to perform the steps of receiving as input one or more keyframes, each keyframe comprising a frame from the video sequence that is located at a temporal distance from the input image, generating a predicted disparity map for each of the keyframes based on one or more depth values associated with pixels within the keyframe, building, based on the predicted disparity map for each of the keyframes, motion vectors between the input image and each of the keyframes describing the change in location of objects depicted in the keyframe and the input image, extracting keyframe feature data from each of the keyframes; and applying the motion vectors to the extracted keyframe feature data for each of the keyframes to guide the filling in of the pixel locations represented by the disocclusion mask.

17. In various embodiments, a computer-implemented method comprises executing a first neural network that predicts pixel-wise depth and disparity values associated with objects depicted in an input image, updating parameters of the first neural network based on a first calculated training loss associated with the predicted disparity values, repeatedly executing the first neural network and updating the parameters of the first neural network, terminating the execution of the first neural network when the first calculated training loss is less than a first threshold value, sequentially executing the first neural network and a second set of neural networks while holding the parameters of the first neural network constant, updating parameters of the second set of neural networks based on second calculated training losses associated with a predicted output image, commencing a first iterative sequential execution of the first neural network and the second set of neural networks while updating the parameters of the second set of neural networks, terminating the first iterative sequential execution of the first neural network and the second set of neural networks when the second calculated training losses are less than a second threshold value, sequentially executing the first neural network and the second set of neural networks, updating parameters of the first neural network and the second set of neural networks based on a third calculated training loss associated with the predicted output image, commencing a second iterative sequential execution of the first neural network and the second set of neural networks while updating the parameters of the first neural network and second set of neural networks, and terminating the second iterative sequential execution of the first neural network and the second set of neural networks when the third calculated training loss is less than a third threshold value.

18. The computer-implemented method of clause 17, wherein the first calculated training loss is a disparity loss $\mathcal{L}_d$ measuring an L1 distance between the predicted disparity values from the first neural network and known training dataset disparity values.

19. The computer-implemented method of clause 17 or 18, wherein the second calculated training losses comprise at least one of a) a frame loss $\mathcal{L}_{L1}$ representing L1 distances determined from a pixel-wise comparison of the predicted output image and ground truth image pair training data and b) a perceptual loss $\mathcal{L}_F$ representing differences in high-level semantic features between the predicted output image and the ground truth image pair training data.

20. The computer-implemented method of any of clauses 17-19, wherein the third calculated training loss is a total training loss $\mathcal{L}$ given by $\mathcal{L} = \mathcal{L}_{L1} + \gamma \cdot \mathcal{L}_F + \delta \cdot \mathcal{L}_d$ where $\gamma$ and $\delta$ are trainable weight parameters associated with the perceptual loss $\mathcal{L}_F$ and the disparity loss $\mathcal{L}_d$, respectively.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1. A computer-implemented method for performing stereo conversion, the computer-implemented method comprising:

    generating, using one or more machine learning models, a predicted disparity map for an input image based on one or more depth values associated with pixels within the input image;
    extracting feature data from the input image, wherein the feature data represents the pixels within the input image;
    applying an offset to each pixel represented by the feature data based on the predicted disparity map;
    identifying a plurality of offset pixels represented by the feature data that are offset to a same pixel location;
    assigning, based on the predicted disparity map, a visibility value to each of the plurality of offset pixels;
    modifying, based on the visibility values, each of the plurality of offset pixels such that one of the plurality of offset pixels is visible and the others of the plurality of offset pixels are hidden; and
    generating an output image based on the feature data and the modified plurality of offset pixels such that the input image and the output image form a stereo pair of images.

2. The computer-implemented method of claim 1, wherein generating the predicted disparity map comprises:

    generating a reduced-resolution version of the input image;
    assigning pixel-wise depth values to pixels representing foreground and background objects depicted in the reduced-resolution version of the input image;
    assigning pixel-wise predicted disparity values in the disparity map based on the depth values such that pixels in the predicted disparity map representing foreground objects are assigned greater disparity values than pixels representing background objects; and
    upsampling the pixel-wise disparity map values associated with the reduced-resolution version of the input image to an original resolution of the input image.

3. The computer-implemented method of claim 2, further comprising:

    receiving one or more user annotations for the input image, each user annotation comprising an identification of a selected portion of the input image and a ground truth disparity value associated with the selected portion; and
    aligning the pixel-wise predicted disparity values for the selected portion of the input image with the associated ground truth disparity values for the selected portion of the input image.

4. The computer-implemented method of claim 3, wherein each of the one or more user annotations for the input image comprises at least one of a bounding box encompassing a portion of the input image, one or more brush strokes denoting portions of the input image, or a manual selection of an object depicted in the input image.

5. The computer-implemented method of claim 1, wherein modifying each of the plurality of offset pixels comprises:

    comparing the associated disparity map values for the plurality of offset pixels; and
    rendering the one of the plurality of offset pixels as visible based on the one of the plurality of offset pixels having the highest disparity map value while hiding the pixels at the same pixel location that have lower disparity map values.

6. The computer-implemented method of claim 1, wherein all of the functions and transformations performed by the one or more machine learning models are fully differentiable.

7. The computer-implemented method of claim 1, further comprising:

generating a disocclusion mask representing pixel locations in the extracted feature data where portions of an image background are disoccluded after applying the offset to each offset pixel represented by the feature data; filling in the pixel locations represented by the disocclusion mask with image data selected from the image background; and generating the output image based on the modified plurality of offset pixels and the filled-in pixel locations represented by the disocclusion mask.

8. The computer-implemented method of claim 7, wherein the image data used to fill in pixel locations represented by the disocclusion mask is selected by applying a neighborhood-based self-attention technique.

9. The computer-implemented method of claim 7, wherein the input image is a single frame of a video sequence, the method further comprising:

   receiving as input one or more keyframes, each keyframe comprising a frame from the video sequence that is located at a temporal distance from the input image; generating a predicted disparity map for each of the keyframes based on one or more depth values associated with pixels within the keyframe; building, based on the predicted disparity map for each of the keyframes, motion vectors between the input image and each of the keyframes describing the change in location of objects depicted in the keyframe and the input image; extracting keyframe feature data from each of the keyframes; and applying the motion vectors to the extracted keyframe feature data for each of the keyframes to guide the filling in of the pixel locations represented by the disocclusion mask.

10. The computer-implemented method of claim 9, wherein a plurality of keyframes are received as input and the plurality of keyframes are selected at exponentially increasing temporal distances from the input image.

11. One or more non-transitory computer-readable media storing instructions that, when executed by one or more processors, cause the one or more processors to perform the steps of:

   generating, using one or more machine learning models, a predicted disparity map for an input image based on one or more depth values associated with pixels within the input image; extracting feature data from the input image, wherein the feature data represents the pixels within the input image; applying an offset to each pixel represented by the feature data based on the predicted disparity map; identifying a plurality of offset pixels represented by the feature data that are offset to a same pixel location; assigning, based on the predicted disparity map, a visibility value to each of the plurality of offset pixels; modifying, based on the visibility values, each of the plurality of offset pixels such that one of the plurality of offset pixels is visible and the others of the plurality of offset pixels are hidden; and generating an output image based on the feature data and the modified plurality of offset pixels such that the input image and the output image form a stereo pair of images.

12. The one or more non-transitory computer-readable media of claim 11, wherein the instructions further cause the one or more processors to perform the steps of:

   generating a reduced-resolution version of the input image; assigning pixel-wise depth values to pixels representing foreground and background objects depicted in the reduced-resolution version of the input image; assigning pixel-wise predicted disparity values in the disparity map based on the depth values such that pixels in the predicted disparity map representing foreground objects are assigned greater disparity values than pixels representing background objects; and upsampling the pixel-wise disparity map values associated with the reduced-resolution version of the input image to an original resolution of the input image.

13. The one or more non-transitory computer-readable media of claim 12 wherein the instructions further cause the one or more processors to perform the steps of:

   receiving one or more user annotations for the input image, each user annotation comprising an identification of a selected portion of the input image and a ground truth disparity value associated with the selected portion; and

aligning the pixel-wise predicted disparity values for the selected portions of the input image with the associated ground truth disparity values for the selected portions of the input image.

14. The one or more non-transitory computer-readable media of claim 11, wherein the instructions to perform the steps of modifying each of the plurality of offset pixels further cause the one or more processors to perform the steps of:

comparing the associated disparity map values for the plurality of offset pixels; and
rendering the one of the plurality of offset pixels as visible based on the one of the plurality of offset pixels having the highest disparity map value while hiding the pixels at the same pixel location that have lower disparity map values.

15. The one or more non-transitory computer-readable media of claim 11, wherein the instructions further cause the one or more processors to perform the steps of:

generating a disocclusion mask representing pixel locations in the extracted feature data where portions of an image background are disoccluded after applying the offset to each offset pixel represented by the feature data;
filling in the pixel locations represented by the disocclusion mask with image data selected from the image background; and
generating the output image based on the modified plurality of offset pixels and the filled-in pixel locations represented by the disocclusion mask.

Computing Device 100

Memory 116

Training Engine 122

Stereo Conversion Engine 124

Storage 114

Interconnect (Bus) 112

Processor(s) 102

I/O Device Interface 104

Network Interface 106

To Network 110

I/O Devices 108

FIG. 1

**210**
Training Data

**212**
CGI Images

**214**
Existing 3-D Movie Sequences

**220**
Training Data Preprocessing Engine

**235**
Disparity Estimation Network

**242**
Feature Extraction Network

**244**
Warping and Splatting Network

**246**
Image Synthesis Network

**240**
Conversion Network

**230**
Machine Learning Model

**260**
Disocclusion Losses

**270**
Disparity/ Perceptual Losses

**280**
Frame Losses

**122**
Training Engine

**250**
Predicted Output Image

FIG. 2

**124**
Stereo Conversion Engine

**300**
Input Image

**305**
Depth Prediction

**310**
Disparity Estimation

**325**
Depth-Aware Splatting

**322**
Feature Extraction

**320**
Predicted Disparity Map

**315**
Disparity Upsampling

**330**
Image Synthesis

**335**
Inpainting

**340**
Compositing Refinement

**345**
Predicted Output Image

## FIG. 3A

**124**
Stereo Conversion Engine

**350**
Input Image

**352**
Input Keyframes

**355**
Depth Prediction

**360**
Disparity Estimation

**375**
Feature Extraction and Depth-Aware Splatting

**372**
Motion Vector Building

**370**
Predicted Disparity Map

**365**
Disparity Upsampling

**380**
Image Synthesis

**385**
Inpainting

**390**
Compositing

**395**
Predicted Output Image

## FIG. 3B

FIG. 4

Start

Execute a first neural network that generates pixel-wise inverse depths and disparities associated with objects depicted in an input image
502

Update parameters of the first neural network based on losses associated with predicted disparities
504

Continue pre-training the first neural network?
506

Yes

No

While holding the weights of the first neural network fixed, execute both the first neural network and a second set of neural networks that extract features from an input image and perform image synthesis on feature data
508

Update parameters of the second set of neural networks based on one or more losses associated with the predicted output image, disparity values, and/or disocclusion areas
510

Continue pre-training the second set of neural networks?
512

Yes

No

Update parameters of the first neural network and second set of neural networks based on one or more losses associated with the predicted output video frame, disparity, and/or disocclusion areas
516

Execute the first neural network and second set of networks end-to-end
514

Continue end-to-end training?
518

Yes

No

End

**FIG. 5**

Start

Receive an input image and optional additional input, perform depth prediction, disparity estimation and disparity upsampling for the input image
<u>602</u>

Generate a predicted disparity map for the input image from disparity estimations
<u>604</u>

Perform feature extraction on the content of the input image to generate extracted feature data
<u>606</u>

Perform warping and depth-aware splatting on the extracted feature data, based on the predicted disparity map
<u>608</u>

Perform background-aware inpainting of disoccluded areas and compositing refinement of splatted pixels in extracted feature data
<u>610</u>

Generate a predicted output image from splatted, inpainted, and composited feature data
<u>612</u>

End

# FIG. 6

Start

Receive a video frame as an input image and one or
more input keyframes, and perform depth prediction,
disparity estimation, and disparity upsampling for the
input image and each keyframe
702

Generate a predicted disparity map for each of the
input image and input keyframes from corresponding
disparity estimations
704

Build motion vectors between the input image and
one or more neighboring input keyframes
706

Perform feature extraction on each of the input image
and input keyframes to generate weighted extracted
feature data for the input image and each input
keyframe, and perform depth-aware splatting
708

Perform inpainting of disoccluded areas and
compositing by applying motion vectors to the
extracted feature data from the input image
710

Generate a predicted output image from splatted,
inpainted and composited feature data
712

End

FIG. 7

Europäisches
Patentamt

European
Patent Office

Office européen
des brevets

# EUROPEAN SEARCH REPORT

**Application Number**

EP 24 17 7489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHEBIN ZHANG ET AL: "Stereoscopic learning for disparity estimation", CIRCUITS AND SYSTEMS (ISCAS), 2011 IEEE INTERNATIONAL SYMPOSIUM ON, IEEE, 15 May 2011 (2011-05-15), pages 365-368, XP031997645, DOI: 10.1109/ISCAS.2011.5937578 ISBN: 978-1-4244-9473-6 * sections I, III * | 1-15 | INV. H04N13/261 G06T7/50 G06V10/70 |
| Y | LEONARD MCMILLAN JR: "AN IMAGE-BASED APPROACH TO THREE-DIMENSIONAL COMPUTER GRAPHICS", A DISSERTATION SUBMITTED IN PARTIAL FULFILLMENT OF THE REQUIREMENTS FOR THE DEGREE OF DOCTOR OF PHILOSOPHY , 1 January 1997 (1997-01-01), pages i-xv, 1, XP002628276, Retrieved from the Internet: URL:ftp://ftp.cs.unc.edu/pub/techreports/97-013.pdf [retrieved on 2011-03-11] * sections 3.5 & 3.7 * | 1-15 | |
| Y | SCHREER O ET AL: "Real-time disparity analysis for applications in immersive tele-conference scenarios - a comparative study", IMAGE ANALYSIS AND PROCESSING, 2001. PROCEEDINGS. 11TH INTERNATIONAL CONFERENCE ON SEPT.26-28, 2001, PISCATAWAY, NJ, USA,IEEE, 26 September 2001 (2001-09-26), pages 346-351, XP010561271, ISBN: 978-0-7695-1183-2 * section 2.1 * | 2-4,12,13 | TECHNICAL FIELDS SEARCHED (IPC) H04N G06V G06T |

-/--

The present search report has been drawn up for all claims

| Place of search | Date of completion of the search | Examiner |
|---|---|---|
| The Hague | 9 October 2024 | Cooke, Edward |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 24 17 7489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/172002 A1 (SANDREW BARRY [US] ET AL) 16 June 2016 (2016-06-16) * paragraph [0305] * | 3,4,13 | |

TECHNICAL FIELDS
SEARCHED      (IPC)

The present search report has been drawn up for all claims

| Place of search | Date of completion of the search | Examiner |
|---|---|---|
| The Hague | 9 October 2024 | Cooke, Edward |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 7489

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2024

| Patent document cited in search report | Publication date | Patent family member(s) | Publication date |
|---|---|---|---|
| US 2016172002 A1 | 16-06-2016 | US 2013266292 A1 | 10-10-2013 |
| | | US 2015358595 A1 | 10-12-2015 |
| | | US 2016172002 A1 | 16-06-2016 |
| | | US 2016379683 A1 | 29-12-2016 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 47394723